# EUROPEAN PATENT SPECIFICATION

(11) **EP 3 550 959 B1**
(45) Date of publication and mention of the grant of the patent: **16.09.2020**
(21) Application number: 17822457.2
(22) Date of filing: 06.12.2017
(51) Int. Cl.: A01G 25/09, E02F 5/02

(54) **APPARATUS FOR IRRIGATION**
GERÄT FÜR BEWÄSSERUNG
DISPOSITIF D'ARROSAGE

(30) Priority: 06.12.2016 IT 201600124002
(43) Date of publication of application: 16.10.2019
(73) Proprietor: Soleaimpresa 4.0 S.r.l., 42016 Guastalla (RE) (IT)
(72) Inventor: DORIGO, Albino, 42016 Guastalla (RE) (IT); SOLIANI, Olimpia, 42016 Guastalla (RE) (IT)
(74) Representative: Fisauli, Beatrice A. M.
(86) International application number: PCT/IB2017/057689
(87) International publication number: WO 2018/104881

(56) References cited:
- FR-A- 1 597 541
- GB-A- 2 328 134
- US-A- 2 718 433
- US-A- 3 942 722
- US-A- 6 068 197
- US-A1- 2011 114 200

## Description

The present invention refers, in general, to an apparatus for irrigation. More particularly, it refers to an apparatus for irrigation of land, preferably but not limited to agricultural land, of high efficiency and capable of operating autonomously

According to the known technique, for the irrigation of extensive crops and full-field crops, the irrigation method usually used is the sprinkling irrigation method that is performed by spraying water directly on the ground.

The application of said method takes place by utilizing different techniques.

One of the most used techniques provides that a rotary sprinkler is mounted on a movable cart pulled by the feeding tube of the sprinkler. The cart is moved along an irrigation line thanks to the winding of the tube around a reel. In this phase, the rotary sprinkler starts running, being fed with water.

According to this technique, the irrigation procedure provides at first the moving away of the cart, and consequently the moving away of the sprinkler, from the collection reel by means of appropriate tractors. Then, the sprinkler is approached by rolling up the tube around the reel. In this phase, the sprinkler is fed.

One problem of this technique is the need of intervention of tractors and operators not only to move away the cart from the reel, but also for moving the entire equipment along a different irrigation line.

Another technique for extensive crops is to use a series of sprinklers fed by an only tube arranged linearly on a movable structure. In turn, this tube is fed at one or both tube ends.

According to this technique, the mobile structure can translate identifying a rectangular irrigation area or can rotate around a central column, called pivot, defining a circular irrigation area.

In the first case, the irrigation system is known as translating wing system while in the second case, the irrigation system is known as pivoting wing system.

As can be evident, although both systems define rather large irrigation areas, such systems involve in any case the intervention of operators for the displacement of the relative equipment for the irrigation of different areas.

Moreover, the translating wing systems or the pivoting wing systems need that the soil to be irrigated be provided with ditches which are to be obtained before positioning the irrigation structure.

The function of some of said ditches is to bring water to the ends of the structure in order to feed the irrigators while the function of the other ditches is to drain excess water into the ground.

Naturally, the formation of said ditches, or the cleaning of the ditches involves a waste of time during which the irrigation can not be carried out.

US2718433 discloses an apparatus for irrigation according to the preamble of claim 1.

One aim of the invention is to remedy the foregoing and further problems by creating a practical and efficient apparatus for irrigation.

Another aim of the invention is to provide an apparatus for irrigation that reduces as much as possible the intervention of operators as well as the set-up phases, namely the phases of arrangement of the relative apparatus during which the irrigation is not carried out.

A further aim of the invention is to provide an apparatus for irrigation which is as autonomous as possible but in any case, this apparatus is capable of intervening selectively in the areas most in need of water and in the most suitable times depending on water and energy available.

These and other aims are all achieved according to the invention by an apparatus for irrigation preferably but not limited to agricultural land, comprising a mobile unit to which an irrigation unit is coupled and is associated to a control unit adapted to control the irrigation unit.

The apparatus according to the invention is characterized by the fact that a trenching device is coupled to said mobile unit, so that as said mobile unit moves from a water source B, a channel C is dug which communicates with the water source B and, therefore, said channel C is filled with water so that the irrigation unit is directly fed by the channel just created and filled.

Hence, the apparatus allows the soil to be irrigated without having to move large structures or plants because the apparatus itself creates the channel from which water is taken and used, at the same time, for the irrigation.

Advantageously, the irrigation unit may comprise an irrigation nozzle connected to a water supply pump which in turn is connected to a suction duct, the free end of which is adapted to be immersed in the channel C below the water surface.

The apparatus according to the invention may comprise first moving means of the suction duct to move the free end of the suction duct itself according to the depth of the channel C.

Advantageously, second moving means may be comprised to move the trenching device in the vertical direction and vary the depth of the channel C which must be formed according to the irrigation needs.

Furthermore, third moving means may be comprised to move the irrigation nozzle and are adapted to rotate and/or translate said irrigation nozzle so as to irrigate a desired portion of land.

The mobile unit may comprise fourth moving means, for example tracks and/or wheels, to move the mobile unit itself and, therefore, the entire apparatus.

The apparatus according to the invention may comprise a communication device adapted to send data of the control unit itself to an operator remote with respect to the apparatus.

Moreover, a GPS device may be comprised for the localization of the apparatus, said GPS device being connected to the control unit, and a video control system may be comprised which is provided with cameras fixed to the apparatus and connected to the control unit so as to verify the operation of the apparatus and visualize the action.

Further features and details of the invention can be better understood from the following specification which is provided by way of a non-restricting example, as well as from the annexed drawing, wherein:
Figure 1 is a schematic top view of an apparatus for irrigation according to the invention;
Figure 2 is a schematic top view of the apparatus in Figure 1 when it is working.

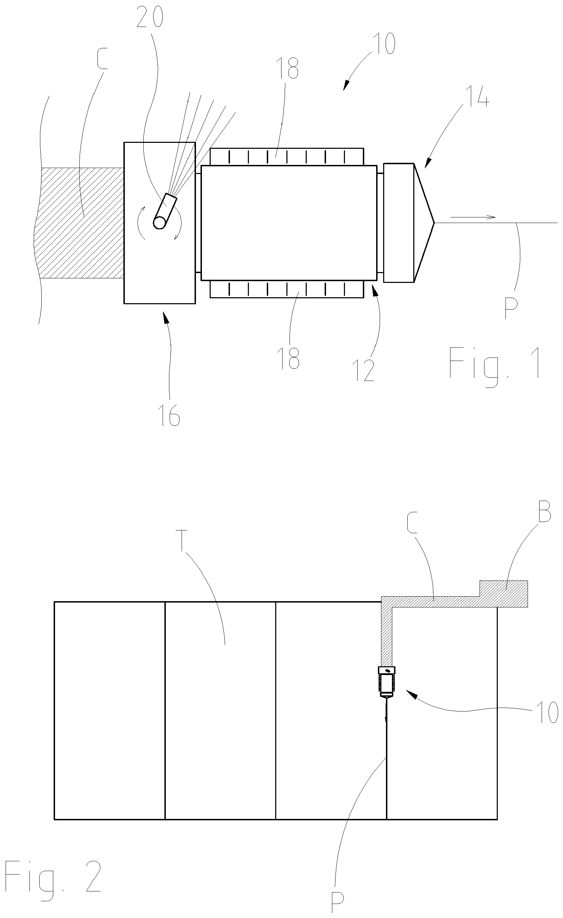

With reference to the annexed figures, in particular to figure 1, number 10 denotes an apparatus for irrigation as a whole, which can move along a path P on a ground T, starting from a basin of water B placed adjacent to the ground T or inside it, on performing at the same time the irrigation of the ground T itself.

The apparatus 10 comprises a mobile unit 12 to which a trenching device 14 is fixed in the front and an irrigation unit 16 is fixed in the back.

The mobile unit 12 allowing the displacement of the apparatus 10 is provided with a motor, which may be an electric motor or an internal combustion engine, and moving means.

In particular, the moving means include a pair of tracks 18, each of them being arranged at a side of the mobile unit and being connected and put in motion by the motor itself.

The moving means may include, as an alternative to the tracks, four wheels to be suitably connected to the motor.

The function of the trenching device 14, arranged in front of the mobile unit, is to dig a channel C in correspondence of the path P of the mobile unit 12.

In particular, the mobile unit 12 is arranged to span the channel C because the distance between the tracks is greater than the width of the channel C itself.

Moreover, the trenching device 14 can move according to a vertical direction with respect to the mobile unit 12 so that it is possible to vary the depth of the channel C itself according to the needs.

The irrigation unit 16 comprises a pump which is suitably connected to the motor of the mobile unit 12 and brings water to an irrigation nozzle 20 from a suction duct (not shown in the figures) which is arranged in the channel C under the irrigation unit 16.

The irrigation nozzle 20 may be a rotary irrigation nozzle so as to irrigate all the ground adjacent to the apparatus 10 in its path P; in any case, the rotation can be controlled and limited angularly so as to irrigate, in case of needs, only one of the two sides which are separated by the path P.

The free end of the suction duct is arranged in the channel C under the free surface of the water and the suction duct can be moved in a vertical direction so as to be adapted to the depth of the channel C itself.

Furthermore, even the irrigation nozzle 20 can be raised or lowered according to the irrigation needs.

The mobile unit 12 includes a control unit which has the function of controlling the several devices in the apparatus 10, such as the tracks 18, the moving means of the trenching device 14, the moving means of the suction duct as well as the pump and the moving means that put the irrigation nozzle in rotation or modify its height.

A communication device, adapted to send data of the control unit to a person who is far from the apparatus, a GPS device for the localization of the apparatus 10, and a video control system with cameras for verifying the operation of the apparatus 10 are connected to the control unit.

Through said devices, a remote operator, that is far from the apparatus, can verify the position of the apparatus itself and observe the condition as well as the actual operation of the apparatus and can choose the path to be taken, the quantity of water for the irrigation and other options.

It is sufficient that the apparatus begins to move from the water basin B so that the water flows without interruptions and obstacles in the channel C dug by the trenching device 14 of the apparatus 10.

A skilled artisan of this sector may introduce changes or variants which have to be deemed as included in the scope of protection of this invention as provided by the appended claims.

For example, according to a variant of the invention, an irrigation apparatus may comprise components similar to the previously described apparatus 10, but the mobile unit may be positioned inside the channel C if the mobile unit is provided with vertical translation means, in addition to the already described moving means, such as tracks or wheels.

## Claims

1. Apparatus (10) for irrigation of lands, comprising a mobile unit (12) to which an irrigation unit (16) is coupled and is associated to a control unit adapted to control the irrigation unit (16), **characterized in that** a trenching device (14) is coupled to said mobile unit (12), so that as said mobile unit (12) moves from a water source (B), a channel (C) is dug which communicates with the water source (B) and, therefore, said channel (C) is filled with water so that the irrigation unit (16) is directly fed by the channel just created and filled.

2. Apparatus (10) according to the preceding claim, wherein the irrigation unit (16) comprises an irrigation nozzle (20) connected to a water supply pump connected, in its turn, to a suction duct, the free end of which is adapted to be immersed in the channel (C) below the water surface.

3. Apparatus (10) according to claim 2, wherein first moving means of the suction duct are comprised to move the free end of the same suction duct according to the depth of the channel (C).

4. Apparatus (10) according to one of the preceding claims, wherein second moving means are comprised to move the trenching device (14) in the vertical direction and vary the depth of the channel (C).

5. Apparatus (10) according to claim 2, wherein third moving means are comprised and are adapted to rotate and/or translate the irrigation nozzle (20).

6. Apparatus (10) according to one of the preceding claims, wherein the mobile unit (12) comprises fourth moving means to move the same mobile unit (12) and, therefore, the entire apparatus (10).

7. Apparatus (10) according to claim 6, wherein the fourth moving means include endless tracks (18) and/or wheels.

8. Apparatus (10) according to one of the preceding claims, wherein a communication apparatus is comprised and is adapted to send data of the same control unit to an operator remote with respect to the apparatus.

9. Apparatus (10) according to one of the preceding claims, wherein a GPS device is comprised for the localization of the apparatus (10), said GPS device being connected to the control unit.

10. Apparatus (10) according to one of the preceding claims, wherein a video control system is comprised which is provided with cameras fixed to the apparatus and connected to the control unit so as to verify the operation of the apparatus (10) and visualize the action.

## Patentansprüche

1. Vorrichtung (10) zur Bewässerung von Land, umfassend eine mobile Einheit (12), mit der eine Bewässerungseinheit (16) gekoppelt ist und die mit einer Steuereinheit verbunden ist, die zur Steuerung der Bewässerungseinheit (16) geeignet ist, **dadurch gekennzeichnet, dass** eine Grabenziehvorrichtung (14) mit der mobilen Einheit (12) gekoppelt ist, so dass, wenn sich die mobile Einheit (12) von einer Wasserquelle (B) wegbewegt, ein Kanal (C) gegraben wird, der mit der Wasserquelle (B) in Verbindung steht, und daher der Kanal (C) mit Wasser gefüllt wird, so dass die Bewässerungseinheit (16) direkt von dem gerade geschaffenen und gefüllten Kanal gespeist wird.

2. Vorrichtung (10) nach dem vorhergehenden Anspruch, wobei die Bewässerungseinheit (16) eine Bewässerungsdüse (20) aufweist, die mit einer Wasserversorgungspumpe verbunden ist, die ihrerseits mit einer Saugleitung verbunden ist, deren freies Ende in den Kanal (C) unterhalb der Wasseroberfläche eingetaucht werden kann.

3. Vorrichtung (10) nach Anspruch 2, wobei erste Bewegungsmittel des Saugkanals vorgesehen sind, um das freie Ende desselben Saugkanals entsprechend der Tiefe des Kanals (C) zu bewegen.

4. Vorrichtung (10) nach einem der vorhergehenden Ansprüche, wobei zweite Bewegungsmittel vorgesehen sind, um die Grabenziehvorrichtung (14) in vertikaler Richtung zu bewegen und die Tiefe des Kanals (C) zu verändern.

5. Vorrichtung (10) nach Anspruch 2, wobei dritte Bewegungsmittel enthalten sind und dazu geeignet sind, die Bewässerungsdüse (20) zu drehen und/oder zu verschieben.

6. Vorrichtung (10) nach einem der vorhergehenden Ansprüche, wobei die mobile Einheit (12) vierte Bewegungsmittel umfasst, um dieselbe mobile Einheit (12) und somit die gesamte Vorrichtung (10) zu bewegen.

7. Vorrichtung (10) nach Anspruch 6, wobei die vierte Bewegungseinrichtung Endlosbahnen (18) und/oder Räder umfasst.

8. Vorrichtung (10) nach einem der vorhergehenden Ansprüche, wobei eine Kommunikationsvorrichtung umfasst und geeignet ist, Daten derselben Steuereinheit an einen in Bezug auf die Vorrichtung entfernten Bediener zu senden.

9. Vorrichtung (10) nach einem der vorhergehenden Ansprüche, wobei ein GPS-Gerät zur Lokalisierung der Vorrichtung (10) vorgesehen ist, wobei das GPS-Gerät mit der Steuereinheit verbunden ist.

10. Vorrichtung (10) nach einem der vorhergehenden Ansprüche, wobei ein Videosteuersystem vorgesehen ist, das mit Kameras versehen ist, die an der Vorrichtung befestigt und mit der Steuereinheit verbunden sind, um den Betrieb der Vorrichtung (10) zu verifizieren und die Aktion zu visualisieren.

## Revendications

1. Appareil (10) pour l'irrigation de terres, comprenantuneunité mobile (12) à laquelleuneunitéd'irrigation (16) estcouplée et estassociée à uneunité de commandeadaptée pour commander l'unitéd'irrigation (16), caractériséencequ'undispositif de creusement de tranchées (14) estcouplé à laditeunité mobile (12), de sorte que lorsqueladiteunité mobile (12) se déplace à partird'une source d'eau (B), un canal (C) estcreusé qui communique avec la source d'eau (B) et, par conséquent, ledit canal (C) estremplid'eau de sorte que l'unitéd'irrigation (16) estdirectementalimentée par le canal qui vient d'être créé et rempli.

2. Appareil (10) selon la revendication précédente, dans lequell'unitéd'irrigation (16) comprendunebused'irrigation (20) reliée à unepomped'alimentationeneaureliée, à son tour, à un conduit d'aspiration, dontl'extrémité libre estadaptée pour êtreimmergée dans le canal (C) sous la surface de l'eau.

3. Appareil (10) selon la revendication 2, dans lequel des premiers moyens de déplacement du conduit d'aspirationsontcompris pour déplacerl'extrémité libre du même conduit d'aspirationenfonction de la profondeur du canal (C).

4. Appareil (10) selonl'une des revendications précédentes, dans lequel des seconds moyens de déplacementsontprévus pour déplacer le dispositif de creusement de tranchées (14) dans la direction verticale et faire varier la profondeur du canal (C).

5. Appareil (10) selon la revendication 2, dans lequel des troisièmesmoyens de déplacementsontcompris et sontadaptés pour faire tourner et/oudéplacer la bused'irrigation (20).

6. Appareil (10) selonl'une des revendications précédentes, dans lequell'unité mobile (12) comprend des quatrièmesmoyens de déplacement pour déplacer la mêmeunité mobile (12) et, par conséquent, l'appareil (10) dans son ensemble.

7. Appareil (10) selon la revendication 6, dans lequel le quatrièmemoyen de déplacementcomprend des pistes sans fin (18) et/ou des roues.

8. Appareil (10) selonl'une des revendications précédentes, dans lequel un appareil de communication estcompris et estadapté pour envoyer des données de la mêmeunité de commande à un opérateur distant par rapport à l'appareil.

9. Appareil (10) selonl'une des revendications précédentes, dans lequel un dispositif GPS estcompris pour la localisation de l'appareil (10), leditdispositif GPS étantconnecté à l'unité de commande.

10. Appareil (10) selonl'une des revendications précédentes, dans lequelestcompris un système de contrôlevidéo qui est muni de camérasfixées à l'appareil et connectées à l'unité de contrôle de manière à vérifier le fonctionnement de l'appareil (10) et à visualiserl'action
